# EUROPÄISCHE PATENTSCHRIFT

(11) **EP 1 298 627 B1**
(45) Veröffentlichungstag und Bekanntmachung des Hinweises auf die Patenterteilung: **30.04.2008**
(21) Anmeldenummer: 02021649.5
(22) Anmeldetag: 27.09.2002
(51) Int. Cl.: G09F 3/02

(54) **Etikettenlaminat**
Label laminate
Laminé pour étiquette

(30) Priorität: 27.09.2001 DE 10147836
(43) Veröffentlichungstag der Anmeldung: 02.04.2003
(73) Patentinhaber: Nordenia Deutschland Gronau GmbH, 48599 Gronau (DE)
(72) Erfinder: Niepelt, Ralf, 48599 Gronau (DE)
(74) Vertreter: Albrecht, Rainer Harald

(56) Entgegenhaltungen:
- EP-A- 0 314 365
- EP-A- 0 335 425
- WO-A-93/03695
- US-A- 5 364 695

## Beschreibung

Die Erfindung betrifft ein Etikettenlaminat bestehend aus einer mehrschichtigen, koextrudierten Etikettenfolie, einer Klebstoffschicht und einem an die Klebstoffschicht anschließenden Trägermaterial.

Etikettenfolien werden heute überwiegend aus Polyethylen mittlerer Dichte (MDPE), das heißt mit einer Dichte von 0,930 bis 0,935 g/cm³ hergestellt. Diese Folien werden üblicherweise ab einer minimalen Dicke von 95 µm auf dem Markt angeboten und zeichnen sich durch eine gute Steifigkeit sowie ein sehr gutes Stanzverhalten aus. Weitere Reduzierungen der Foliendicke führen bei diesem Rohstoff jedoch zu drastischen Einbußen in der Steifigkeit, die wichtig für die Spendbarkeit der Etiketten beim Verarbeiter ist. Aus diesem Grund wird bei Folien, die dünner als 90 µm sind, Polyethylen hoher Dichte (HDPE) mit einer Dichte von 0,955 bis 0,965 g/cm³ eingesetzt, um den Verlust der Steifigkeit auszugleichen. Der Nachteil dieser Etikettenfolien, die abhängig von der Foliendicke 20 bis 50 Gew.-% HDPE enthalten können, ist, dass sich das Stanzverhalten mit zunehmendem HDPE-Gehalt deutlich verschlechtert. Beide Folientypen werden üblicherweise als einschichtige oder symmetrisch aufgebaute Mehrschichtfolien hergestellt, um einer Rollneigung im Etikett entgegen zu wirken.

Aus EP-B 0 335 425 ist ein mehrlagiges Flächenmaterial bekannt, das miteinander verbundene Schichten umfasst. Es handelt sich hierbei um ein Koextrudat aus einer relativ dicken Kernschicht und einer dünnen Oberflächenschicht auf der Oberseite des Koextrudats. Das Material weist eine mit Druckfarbe bedruckbare Oberfläche und eine Schicht aus druckempfindlichem Kunststoff auf, die auf der zur Oberseite abgewandten Seite des Koextrudats angeordnet ist. Das Material wird zur Herstellung von Etiketten verwendet. Die Kernschicht besteht aus Polyethylen niedriger, mittlerer oder hoher Dichte, während die dünne Oberflächenschicht als Ethylen-Vinylacetat, Polyvinylchlorid oder anderen Polymeren mit Ausnahme von Polyethylen bestehen kann. In jedem Fall werden also die Kernschicht und die dünne Oberflächenschicht aus unterschiedlichem Material hergestellt. Dies führt zu einem Materialmix, der hinsichtlich der Herstellung und insbesondere der Entsorgung des Materials nachteilig ist. Aus WO93/03695 ist ein Etikettenlaminat bekannt, das aus zwei Schichten besteht, wobei die Kernschicht, die 76 µm bis 89 µm dick ist, aus 40% bis 95% LDPE, Rest HDPE, besteht. Die Kernschicht wird mit einer bedruckbaren Schicht bedeckt, die aus LDPE besteht und etwa 30 µm dick ist.

Es ist Aufgabe der vorliegenden Erfindung, ein Etikettenlaminat mit einer Etikettenfolie anzugeben, die die geschilderten Nachteile des Standes der Technik vermeidet. Die erfindungsgemäße Etikettenfolie soll keine Rollneigung zeigen und gut stanzbar sein.

Gegenstand der Erfindung und Lösung dieser Aufgabe ist ein Etikettenlaminat bestehend aus
a) einer mehrschichtigen, koextrudierten Etikettenfolie mit einer bedruckbaren Außenschicht (1), die 60 bis 80 µm dick ist und aus 60 bis 80 Gew.-% LDPE sowie 40 bis 20 Gew.-% HDPE besteht, und mit einer an die Außenschicht angrenzenden Unterschicht (2), die 10 bis 20 µm dick ist und aus 100 Gew.-% LDPE besteht,
b) einer Klebstoffschicht (3), die auf der HDPE-freien Seite der Unterschicht (2) angeordnet ist, und
c) einem an die Klebstoffschicht anschließenden Trägermaterial (4).

Dabei wird LDPE (low density polyethylene) als Polyethylen niedriger Dichte und HDPE (high density polyethylene) als Polyethylen hoher Dichte definiert. Im Rahmen der Erfindung weist das zur Herstellung der Etikettenfolie verwendete LDPE vorzugsweise eine Dichte von 0,928 bis 0,935 g/cm³ auf. Das HDPE besitzt vorzugsweise eine Dichte von 0,955 bis 0,965 g/cm³.

In weiterer Ausgestaltung lehrt die Erfindung, dass die Außenschicht ihrerseits aus wenigstens zwei Schichten aufgebaut ist, wobei die außen angeordnete Schicht 10 bis 30 µm dick ist und aus 10 bis 30 Gew.-% HDPE, Rest LDPE, besteht und wobei die andere bzw. die weiteren Schichten der Außenschicht insgesamt 40 bis 50 µm dick sind und aus 50 bis 69 Gew.-% LDPE und 50 bis 31 Gew.-% HDPE bestehen.

Die erfindungsgemäße Etikettenfolie zeichnet sich dadurch aus, dass eine Schicht aus herkömmlichem LDPE gefertigt wird. Diese Schicht stellt die Rückseite des fertigen Etiketts dar, welche mit einem druckempfindlichen Klebstoff beschichtet wird. Die andere Schicht, die als Außenschicht ein- oder mehrschichtig ausgebildet sein kann, enthält HDPE. Beim Rotations- oder Flachbettstanzen des fertigen Etikettenlaminats, das aus dem mit Klebstoff beschichteten Etikett besteht und gegen ein Trägermaterial, z. B. Silikonpapier, als Release kaschiert ist, wird der Stanzwiderstand durch die zum Trägermaterial liegende LDPE-Schicht, die keine HDPE-Anteile enthält, deutlich verringert. Beim Stanzen soll ausschließlich das Etikett, nicht aber das Silikonpapier durchgestanzt werden. Daher sind die Klingen der Stanz-Patrize so eingestellt, dass sie gerade das Etikett durchstanzen, aber das Trägermaterial nur leicht anstanzen, ohne es zu beschädigen. Die größte Stanzkraft wird beim Durchbrechen der HDPE-haltigen Oberfläche des Etiketts aufgebracht. Die weniger zähe LDPE-Schicht reduziert beim Austritt der Stanzklingen die Stanzkraft. Es kommt in der Praxis teilweise vor, dass die Etiketten nicht vollständig durchgestanzt werden. Dadurch, dass die LDPE-Schicht weniger zäh ist, können die Etiketten dennoch leichter verarbeitet werden, weil das LDPE durch die geringere Weiterreißfestigkeit leichter reißt als die HDPE-haltige Außenschicht.

Gemäß einer besonders bevorzugten Ausführungsform der Erfindung weist die koextrudierte Etikettenfolie einen dreischichtigen Aufbau mit Unterschicht (2) und einer aus den Schichten (11, 12) bestehenden zweischichtigen Außenschicht auf, wobei das Dickenverhältnis der Schichten (11) : (12) : (2) etwa den Wert 1,7 : 3 : 1 aufweist.

Als Trägermaterial wird vorteilhaft Silikonpapier eingesetzt. Auch andere Trennfolien sind verwendbar, z. B. solche mit Polyolefinen als Trägerfolie.

Im Folgenden wird die Erfindung anhand einer Zeichnung sowie anhand von Ausführungsbeispielen näher erläutert.

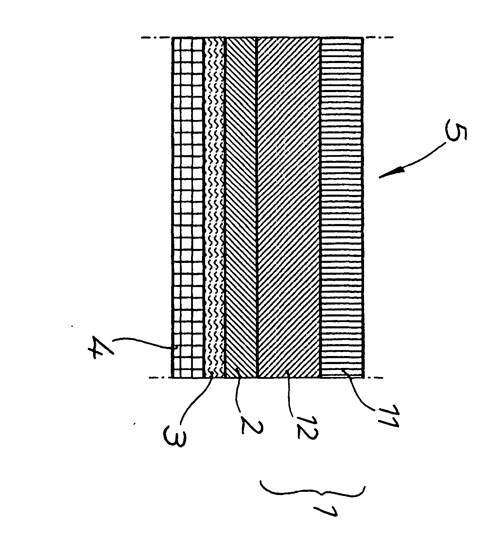

Die einzige Figur zeigt einen Schnitt durch ein erfindungsgemäßes Etikettenlaminat, das in seinem grundsätzlichen Aufbau aus einer mehrschichtigen, koextrudierten Etikettenfolie 5, einer Klebstoffschicht 3 und einem an die Klebstoffschicht anschließenden Trägermaterial 4 besteht. Die Etikettenfolie 5 setzt sich aus einer bedruckbaren, HDPEenthaltenden Außenschicht 1 und einer an die Außenschicht angrenzenden LDPE-Unterschicht 2 zusammen. Die Außenschicht 1 ist insgesamt 60 bis 80 µm dick und besteht aus 60 bis 80 Gew.-% LDPE sowie 40 bis 20 Gew.-% HDPE. Die Unterschicht 2 ist 10 bis 20 µm dick und besteht aus 100 Gew.-% LDPE. Die Klebstoffschicht 3 ist auf der HDPE-freien Seite der Unterschicht 2 angeordnet und mit dem Trägermaterial 4 verbunden.

Im Ausführungsbeispiel ist die Außenschicht 1 zweischichtig ausgebildet, wobei die außen angeordnete Schicht 11 eine Dicke von 25 µm aufweist und aus 80 Gew.-% LDPE und 20 Gew.-% HDPE besteht. Die andere Schicht 12 ist 45 µm dick und besteht aus 60 Gew.-% LDPE und 40 Gew.-% HDPE. Die aus LDPE bestehende Unterschicht 2 ist im Ausführungsbeispiel 15 µm dick.

### Vergleichsbeispiel 1

Es wurde eine einschichtige Etikettenfolie aus einem Gemisch aus 70 Gew.-% LDPE und 30 Gew.-% HDPE mit einer Gesamtschichtstärke von 85 µm hergestellt. Die Folie erwies sich als schlecht stanzbar.

### Vergleichsbeispiel 2

Es wurde eine Etikettenfolie mit symmetrischer Schichtfolge hergestellt, deren erste Schicht aus 80 Gew.-% LDPE und 20 Gew.-% HDPE besteht und eine Schichtstärke von 28 µm aufweist. Die zweite Schicht ist 29 µm dick und besteht aus 60 Gew.-% LDPE und 40 Gew.-% HDPE. Die dritte Schicht entspricht der ersten Schicht. Sie ist ebenfalls 28 µm dick und besteht aus 80 Gew.-% LDPE und 20 Gew.-% HDPE. Die Etikettenfolie ist etwas besser stanzbar als das Material gemäß Vergleichsbeispiel 1. Die Stanzbarkeit ist dennoch nicht zufriedenstellend; das Material wurde weiterhin als schwer stanzbar beurteilt.

### Vergleichsbeispiel 3

Es wurde eine dreischichtige Folie mit asymmetrischen Schichtenlagen hergestellt, deren erste Schicht bei einer Stärke von 15 µm aus 100 Gew.-% LDPE besteht. Die zweite Schicht ist 45 µm dick und besteht aus 60 Gew.-% LDPE und 40 Gew.-% HDPE. Die dritte Schicht, welche die mit einem druckempfindlichen Klebstoff zu beschichtende Rückseite des Etiketts bildet, ist 25 µm dick und besteht aus 80 Gew.-% LDPE und 20 Gew.-% HDPE. Auch diese Folie ist besser stanzbar als das Material des Vergleichsbeispiels 1. Es zeigt sich jedoch weiterhin insgesamt eine noch nicht ausreichende Stanzbarkeit, die derjenigen des Vergleichsbeispiels 2 entspricht.

### Beispiel 1 (erfindüngsgemäß)

Es wurde eine asymmetrische Etikettenfolie durch Koextrusion hergestellt, die eine bedruckbare Außenschicht mit einer Schichtdicke von 70 µm und eine daran anschließende, die Rückseite des Etikettes bildende Unterschicht mit einer Schichtdicke von 15 µm aufweist. Die 70 µm dicke Außenschicht besteht aus 70 Gew.-% LDPE und 30 Gew.-% HDPE. Die Unterschicht besteht zu 100 Gew.-% aus LDPE. Die Folie zeigt eine gute Stanzbarkeit und weist keine Rollneigung auf.

### Beispiel 2 (erfindungsgemäß)

Durch Koextrusion wurde eine asymmetrische Etikettenfolie mit einer 70 µm dicken, bedruckbaren Außenschicht und einer 15 µm dicken Unterschicht hergestellt. Die Unterschicht besteht vollständig aus LDPE und bildet die mit einer Klebstoffschicht zu versehende Rückseite des Etikettes. Die Außenschicht ist ihrerseits aus zwei Schichten aufgebaut, wobei die außen angeordnete Schicht 25 µm dick ist und aus 80 Gew.-% LDPE und 20 Gew.-% HDPE besteht und wobei die andere Schicht 45 µm dick ist und aus 60 Gew.-% LDPE und 40 Gew.-% HDPE besteht. Die Stanzbarkeit dieser Etikettenfolie ist erheblich besser als die Stanzbarkeit der in den Vergleichsbeispielen beschriebenen Folien. Die Folie zeigt ferner keine Rollneigung.

Die in den Beispielen beschriebenen Etikettenfolien wurden rückseitig mit einem druckempfindlichen Klebstoff beschichtet und gegen Silikonpapier als Release kaschiert.

## Patentansprüche

1. Etikettenlaminat bestehend aus
a) einer mehrschichtigen koextrudierten Etikettenfolie mit einer bedruckbaren Außenschicht (1), die 60 bis 80 µm dick ist und aus 60 bis 80 Gew.-% LDPE sowie 40 bis 20 Gew.-% HDPE besteht, und mit einer an die Außenschicht angrenzenden Unterschicht (2), die 10 bis 20 µm dick ist und aus 100 Gew.-% LDPE besteht,
b) einer Klebstoffschicht (3), die auf der HDPE-freien Seite der Unterschicht (2) angeordnet ist, und
c) einem an die Klebstoffschicht anschließenden Trägermaterial (4).

2. Etikettenlaminat nach Anspruch 1, **dadurch gekennzeichnet, dass** die Außenschicht (1) ihrerseits aus wenigstens zwei Schichten aufgebaut ist, wobei die außen angeordnete Schicht (11) 10 bis 30 µm dick ist und aus 10 bis 30 Gew.-% HDPE, Rest LDPE, besteht und wobei die andere bzw. die weiteren Schichten der Außenschicht (1) insgesamt 40 bis 50 µm dick sind und aus 50 bis 69 Gew.-% LDPE und 50 bis 31 Gew.-% HDPE bestehen.

3. Etikettenlaminat nach Anspruch 1 oder 2, **dadurch gekennzeichnet, dass** das LDPE eine Dichte von 0,928 bis 0,935 g/cm³ aufweist.

4. Etikettenlaminat nach einem der Ansprüche 1 bis 3, **dadurch gekennzeichnet, dass** das HDPE eine Dichte von 0,955 bis 0,965 g/cm³ aufweist.

5. Etikettenlaminat nach Anspruch 2, **dadurch gekennzeichnet, dass** die koextrudierte Etikettenfolie einen dreischichtigen Aufbau mit Unterschicht (2) und einer aus den Schichten (11, 12) bestehenden zweischichtigen Außenschicht aufweist, wobei das Dickenverhältnis der Schichten (11) : (12) : (2) etwa den Wert 1,7 : 3 : 1 aufweist.

6. Etikettenlaminat nach einem der Ansprüche 1 bis 5, **dadurch gekennzeichnet, dass** das Trägermaterial aus Silikonpapier oder einer Trennfolie aus Polyolefinen besteht.

## Claims

1. Label laminate consisting of
a) a multilayer coextruded label film comprising a printable outer layer (1) which has a thickness of 60 to 80 µm and which consists of 60 to 80% by weight LDPE and 40 to 20% by weight HDPE, and comprising an underlayer (2) which adjoins the outer layer and has a thickness of 10 to 20 µm and consists of 100% LDPE,
b) an adhesive layer (3) which is arranged on the HDPE-free side of the underlayer (2), and
c) a carrier material (4) which adjoins the adhesive layer.

2. Label laminate according to claim 1, **characterised in that** the outer layer (1) is in turn composed of at least two layers, wherein the layer (11) arranged on the outside has a thickness of 10 to 30 µm and consists of 10 to 30% by weight HDPE and the rest LDPE, and wherein the other or further layers of the outer layer (1) have a total thickness of 40 to 50 µm and consist of 50 to 69% by weight LDPE and 50 to 31% by weight HDPE.

3. Label laminate according to claim 1 or 2, **characterised in that** the LDPE has a density of 0.928 to 0.935 g/cm³.

4. Label laminate according to one of claims 1 to 3, **characterised in that** the HDPE has a density of 0.955 to 0.965 g/cm³.

5. Label laminate according to claim 2, **characterised in that** the coextruded label film has a three-layer structure comprising an underlayer (2) and a two-layer outer layer consisting of the layers (11, 12), wherein the thickness ratio of the layers (11):(12):(2) has approximately the value 1,7:3;1.

6. Label laminate according to one of claims 1 to 5, **characterised in that** the carrier material consists of silicone paper or a release film made from polyolefins.

## Revendications

1. Stratifié pour étiquette comprenant
a) une feuille pour étiquette coextrudée multicouches comprenant une couche extérieure (1) imprimable, qui fait 60 à 80 µm d'épaisseur et est constituée pour 60 à 80 % en poids de LDPE et de 40 à 20 % en poids de HDPE, et une couche inférieure (2) contiguë à la couche extérieure, qui a une épaisseur de 10 à 20 µm et est constituée de LDPE pour 100 % en poids,
b) une couche de colle (3), qui est disposée sur le côté exempt de HDPE de la couche inférieure (2), et
c) un matériau support (4) faisant suite à la couche de colle.

2. Stratifié pour étiquette selon la revendication 1, **caractérisé en ce que** la couche extérieure (1) est conçue pour sa part à base d'au moins deux couches, la couche (11) disposée à l'extérieur faisant 10 à 30 µm d'épaisseur et étant constituée pour 10 à 30 % en poids de HDPE, le reste étant formé de LDPE, et l'autre respectivement les autres couches de la couche extérieure (1) ayant une épaisseur totale de 40 à 50 µm et étant constituées pour 50 à 69 % en poids de LDPE et pour 50 à 31 % en poids de HDPE.

3. Stratifié pour étiquette selon la revendication 1 ou 2, **caractérisé en ce que** le LDPE présente une densité de 0,928 à 0,935 g/cm³.

4. Stratifié pour étiquette selon l'une quelconque des revendications 1 à 3, **caractérisé en ce que** le HDPE présente une densité de 0,955 à 0,965 g/cm³.

5. Stratifié pour étiquette selon la revendication 2, **caractérisé en ce que** la feuille pour étiquette coextrudée présente une structure à trois couches avec une couche inférieure (2) et une couche extérieure à deux couches et constituée des couches (11, 12), le rapport d'épaisseur des couches (11) : (12) : (2) présentant la valeur de 1,7 : 3 :1.

6. Stratifié pour étiquette selon l'une quelconque des revendications 1 à 5, **caractérisé en ce que** le matériau support est à base de papier silicone ou d'un film de séparation à base de polyoléfines.
